# EUROPEAN PATENT APPLICATION

(11) **EP 4 810 667 A1**
(43) Date of publication of application: **23.09.2026**
(21) Application number: 24891114.1
(22) Date of filing: 03.10.2024
(51) Int. Cl.: C25B 9/23, B05D 3/00, B05D 3/02, B05D 3/12, B05D 7/00, B05D 7/24, C25B 1/04, C25B 9/00, C25B 11/054, C25B 11/069, C25B 13/04

(54) **METHOD FOR PRODUCING CATALYST LAYER-COATED ION-EXCHANGE MEMBRANE**

(30) Priority: 13.11.2023 JP 2023193025
(71) Applicant: FUJIFILM Corporation, Tokyo 106-8620 (JP)
(72) Inventor: IWASE, Eijiro, ashigara-shi, Kanagawa 250-0193 (JP); MOCHIZUKI, Aya, ashigara-shi, Kanagawa 250-0193 (JP)
(74) Representative: Dehns Germany Partnerschaft mbB
(86) International application number: PCT/JP2024/035512
(87) International publication number: WO 2025/105072

(57) **Abstract**

Provided is a method for producing an ion-exchange membrane with a catalyst layer, the method including: a step A of disposing, on at least one surface of an ion-exchange membrane, a catalyst dispersion layer obtained by forming a catalyst dispersion containing a catalyst and an ionomer resin into a predetermined shape, the catalyst dispersion having a viscosity of 1 Pa·s to 500 Pa·s at 25°C, to obtain a laminate having the ion-exchange membrane and the catalyst dispersion layer having a polygonal shape; and a step B of pressing the laminate heated to a temperature of 100°C to 200°C.

## Description

### BACKGROUND OF THE INVENTION

### 1. Field of the Invention

The present disclosure relates to a method for producing an ion-exchange membrane with a catalyst layer.

### 2. Description of the Related Art

In recent years, the use of hydrogen has been attracting attention from the viewpoint of utilizing renewable energy. In addition, examples of a hydrogen production method include solid polymer electrolyte water electrolysis. In solid polymer electrolyte water electrolysis, in recent years, a catalyst coated membrane (CCM) in which an electrode catalyst layer containing a catalyst for water electrolysis and a solid polymer electrolyte (for example, an ionomer resin) is formed on both sides of a polymer electoron membrane (PEM) which is an ion-exchange membrane has been used as a member constituting a water electrolysis device.

As the catalyst layer for water electrolysis included in the CCM, for example, a catalyst layer formed by using Pt/C (platinum-supported carbon) as a hydrogen (H) generation catalyst, and using IrO₂ as an oxygen (O₂) generation catalyst, dispersing these catalysts respectively in an ionomer resin, and further dispersing the catalysts in water or a lower alcohol to prepare a catalyst ink, applying the obtained catalyst ink to a release material, drying the applied ink, and thermally transferring the layer formed of the catalyst ink to an ion-exchange membrane, is generally known.

In addition, regarding the production of the catalyst ink, JP2021-150174A discloses a step of dispersing catalyst-supported particles in a solvent by a jet-mill method to generate a catalyst dispersion liquid, and a step of subjecting a mixed solution obtained by mixing the catalyst dispersion liquid with an ionomer to shear treatment to generate a catalyst ink for a fuel cell. In addition, JP6310741B discloses, with the object of obtaining a uniform coating shape, that a catalyst ink is used as a coating solution in a coating method in which a coating solution is intermittently applied in a predetermined manner.

### SUMMARY OF THE INVENTION

In the ion-exchange membrane with a catalyst layer applied to a solid polymer electrolyte water electrolysis device, it is considered important, from the viewpoint of high-efficiency hydrogen production, that a catalyst layer having excellent shape stability is disposed at a predetermined position on the ion-exchange membrane.

However, in a method of forming a catalyst layer on an ion-exchange membrane by wet coating and drying using a catalyst ink, and then performing thermal transfer, it is difficult to obtain a catalyst layer having excellent shape stability.

In addition, from the viewpoint of a pipe layout in a water electrolysis device, there is a demand for a polygonal shape of the catalyst layer, but in a case where the catalyst layer is formed in a polygonal shape, an edge defect may occur. The edge defect of the catalyst layer significantly impairs the generation efficiency of hydrogen.

The present disclosure has been made in consideration of the circumstances described above.

An object to be achieved by an embodiment of the present disclosure is to provide a method for producing an ion-exchange membrane with a catalyst layer, in which a catalyst layer having excellent dimensional stability can be formed.

The present disclosure includes the following aspects.
<1> A method for producing an ion-exchange membrane with a catalyst layer, the method comprising:
   a step A of disposing, on at least one surface of an ion-exchange membrane, a catalyst dispersion layer obtained by forming a catalyst dispersion containing a catalyst and an ionomer resin into a predetermined shape, the catalyst dispersion having a viscosity of 1 Pa·s to 500 Pa·s at 25°C, to obtain a laminate having the ion-exchange membrane and the catalyst dispersion layer; and
   a step B of pressing the laminate heated to a temperature of 100°C to 200°C.
<2> The method for producing an ion-exchange membrane with a catalyst layer according to <1>, in which the catalyst dispersion contains an alcohol.
<3> The method for producing an ion-exchange membrane with a catalyst layer according to <2>, in which the alcohol is at least one selected from ethanol or 2-propanol.
<4> The method for producing an ion-exchange membrane with a catalyst layer according to any one of <1> to <3>, in which the catalyst contains an aggregate having a secondary particle diameter of 10 µm or less.
<5> The method for producing an ion-exchange membrane with a catalyst layer according to any one of <1> to <4>, in which, in the step A, catalyst dispersion layers are formed on both surfaces of the ion-exchange membrane to obtain the laminate.
<6> The method for producing an ion-exchange membrane with a catalyst layer according to any one of <1> to <5>, in which, in the step A, the catalyst dispersion layer obtained by forming the catalyst dispersion into a predetermined shape is disposed on one surface of a substrate X to obtain a transfer material X having the substrate X and the catalyst dispersion layer, and then the catalyst dispersion layer included in the transfer material X is superimposed on at least one surface of the ion-exchange membrane to obtain the laminate.
<7> The method for producing an ion-exchange membrane with a catalyst layer according to <6>, in which the step A includes preheating the catalyst dispersion layer included in the transfer material X to a temperature of 70°C to 180°C, and then superimposing the catalyst dispersion layer on the at least one surface of the ion-exchange membrane to obtain the laminate.

According to an embodiment of the present disclosure, there is provided a method for producing an ion-exchange membrane with a catalyst layer, in which a catalyst layer having excellent dimensional stability can be formed.

### BRIEF DESCRIPTION OF THE DRAWINGS

FIG. 1 is a schematic view for describing an example of a series of steps including a step A and a step B, the step A including forming a catalyst dispersion layer on at least one surface of an ion-exchange membrane using a transfer substrate X.
FIG. 2 is a schematic view showing an image inspection device for evaluating dimensional stability of a catalyst layer.
FIG. 3 is a photograph of an entire decagonal catalyst layer formed in Example 1, which is taken from an upper surface.
FIG. 4 is a photograph for describing a portion with disordered edges in the evaluation of the dimensional stability.

### DESCRIPTION OF THE PREFERRED EMBODIMENTS

Hereinafter, a method for producing an ion-exchange membrane with a catalyst layer according to the embodiment of the present disclosure will be described. However, the method for producing an ion-exchange membrane with a catalyst layer according to the embodiment of the present disclosure is not limited to the following embodiments, and can be carried out with appropriate modifications within the scope of the object of the present disclosure.

In the present disclosure, the numerical ranges shown using "to" indicate ranges including the numerical values described before and after "to" as a lower limit value and an upper limit value. In a numerical range described in a stepwise manner in the present disclosure, an upper limit value described in a certain numerical range may be replaced with an upper limit value in another numerical range described in a stepwise manner, and a lower limit value described in a certain numerical range may be replaced with a lower limit value in another numerical range described in a stepwise manner. In a numerical range described in a stepwise manner in the present disclosure, an upper limit value or a lower limit value described in a certain numerical range may be replaced with a value shown in Examples.

In the present disclosure, a combination of two or more preferred aspects is a more preferred aspect.

In the present specification, in a case where a plurality of substances corresponding to each component are present in a composition, the amount of each component in the composition means a total amount of the plurality of the corresponding substances which are present in the composition unless otherwise specified.

In the present disclosure, a term "step" not only includes an independent step, but also includes a step, in a case where the step may not be distinguished from the other steps, as long as the expected object of the step is achieved.

In the present disclosure, "% by mass" and "% by weight" have the same meaning, and "part(s) by mass" and "part(s) by weight" have the same meaning.

In the present disclosure, "total solid content" refers to the total mass of components excluding a solvent from the entire composition. The "solid content" may be a solid or a liquid at 25°C.

A method for producing an ion-exchange membrane with a catalyst layer according to the embodiment of the present disclosure includes a step A (hereinafter, also simply referred to as "step A") of disposing a catalyst dispersion layer, which is obtained by forming a catalyst dispersion (hereinafter, also referred to as "specific catalyst dispersion") containing a catalyst and an ionomer resin into a predetermined shape, the catalyst dispersion having a viscosity of 1 Pa·s to 500 Pa·s at 25°C, on at least one surface of an ion-exchange membrane to obtain a laminate including the ion-exchange membrane and the catalyst dispersion layer, and a step B (hereinafter, also simply referred to as "step B") of pressing the laminate heated to a temperature of 100°C to 200°C.

The method for producing an ion-exchange membrane with a catalyst layer according to the embodiment of the present disclosure may include other steps as necessary, in addition to the step A and the step B.

According to the method for producing an ion-exchange membrane with a catalyst layer according to the embodiment of the present disclosure, an ion-exchange membrane with a catalyst layer having excellent dimensional stability can be obtained. The reason for this is not clear, but is presumed as follows.

In the method for producing an ion-exchange membrane with a catalyst layer according to the embodiment of the present disclosure, since the specific catalyst dispersion having a viscosity of 1 Pa·s to 500 Pa·s is used in the step A, a laminate having a catalyst dispersion layer having a predetermined shape at a predetermined position of the ion-exchange membrane with high accuracy can be obtained. That is, since the viscosity of the specific catalyst dispersion is as high as 1 Pa·s to 500 Pa·s, the obtained catalyst dispersion layer has excellent shape stability of an edge portion in a plan view and a cross-sectional view, and has an expected thickness. In addition, since the viscosity of the specific catalyst dispersion is 1 Pa·s to 500 Pa·s, a load in a case of drying the catalyst dispersion layer can be significantly reduced, and thus deformation in a case of forming a multi-catalyst dispersion layer on the ion-exchange membrane and/or on the substrate X can be effectively suppressed.

Furthermore, in the step B, the laminate is heated to a temperature of 100°C to 200°C during the pressing, and the laminate in a state of being subjected to heat is pressed, so that the dissolution of the ionomer resin can be controlled, and the thermal deformation of the obtained catalyst layer can be effectively suppressed.

As a result, it is considered that an ion-exchange membrane with a catalyst layer having excellent dimensional stability can be obtained.

On the other hand, JP2021-150174A and JP6310741B do not describe matters corresponding to the step A and the step B of the ion-exchange membrane with a catalyst layer according to the embodiment of the present disclosure.

In addition, the catalyst for water electrolysis contains a valuable rare metal such as platinum, but in the method for producing an ion-exchange membrane with a catalyst layer according to the embodiment of the present disclosure, since only the amount of the specific catalyst dispersion required for forming the catalyst layer can be used, there is also an advantage that the loss of the rare metal does not occur.

Furthermore, the method for producing an ion-exchange membrane with a catalyst layer according to the embodiment of the present disclosure has an advantage that the drying process is not required to be performed. It is known that the drying process is a process that requires a large amount of energy, and occupies a large part of the energy cost in the production. In other words, the drying process is a process in which a large amount of carbon dioxide is emitted. The technology for efficiently extracting hydrogen is a technology that can contribute to the realization of carbon neutrality from the viewpoint of reducing carbon dioxide. Therefore, it is also desired that the method itself for realizing the high-efficiency production of hydrogen can suppress the amount of carbon dioxide emitted. The method for producing an ion-exchange membrane with a catalyst layer according to the embodiment of the present disclosure can also meet such a demand.

Hereinafter, each step of the method for producing an ion-exchange membrane with a catalyst layer according to the embodiment of the present disclosure will be described.

### [Step A]

The step A is a step of disposing a catalyst dispersion layer, which is obtained by forming a catalyst dispersion (specific catalyst dispersion) containing a catalyst and an ionomer resin into a predetermined shape, the catalyst dispersion having a viscosity of 1 Pa·s to 500 Pa·s at 25°C, on at least one surface of an ion-exchange membrane, to obtain a laminate including the ion-exchange membrane and the catalyst dispersion layer.

In the step A, the catalyst dispersion layer obtained by forming the specific catalyst dispersion into the predetermined shape is disposed on at least one surface of the ion-exchange membrane. The predetermined shape can be a shape of the catalyst layer desired in a case where the ion-exchange membrane with a catalyst layer is incorporated into a water electrolysis device.

The shape may be a circular shape or a polygonal shape in a plan view, and is preferably a convex polygonal shape. The convex polygonal shape may be, for example, a quadrangular shape, a pentagonal shape, a hexagonal shape, a heptagonal shape, an octagonal shape, a nonagonal shape, a decagonal shape, a hendecagonal shape, or a dodecagonal shape. A part of the corners of the convex polygonal shape or all of the corners of the convex polygonal shape may have a curve (in other words, a "rounding").

The thickness of the catalyst dispersion layer included in the laminate can be, for example, 0.5 µm to 50 µm.

The area of the catalyst dispersion layer included in the laminate is not limited in size, and can be determined according to the shape of the catalyst dispersion layer, the disposition position on the ion-exchange membrane, and the like. The area of the catalyst dispersion layer included in the laminate can be, for example, 2 cm² to 100,000 cm² in a plan view.

The ion-exchange membrane is not particularly limited as long as the ion-exchange membrane has proton conductivity and can be used in a solid polymer electrolyte water electrolysis device. Examples of the resin constituting the ion-exchange membrane include a perfluorosulfonic acid-based polymer and a hydrocarbon-based polymer, and a perfluorosulfonic acid-based polymer is preferable.

The ion-exchange membrane may be a single sheet or a belt shape, but from the viewpoint of productivity, a belt shape is preferable.

In the step A, as an aspect of obtaining the laminate having the ion-exchange membrane and the catalyst dispersion layer, an aspect in which the specific catalyst dispersion is directly formed into a predetermined shape on at least one surface of the ion-exchange membrane to form the catalyst dispersion layer may be adopted.

In the step A, as an aspect of obtaining the laminate having the ion-exchange membrane and the catalyst dispersion layer, from the viewpoint of productivity, an aspect in which the catalyst dispersion layer obtained by forming the catalyst dispersion into a predetermined shape is disposed on one surface of the substrate X to obtain a transfer material X having the substrate X and the catalyst dispersion layer, and then the catalyst dispersion layer of the transfer material X is superimposed on at least one surface of the ion-exchange membrane to obtain the laminate is preferable.

Examples of a method of forming the catalyst dispersion layer on the ion-exchange membrane or on the substrate X include a method of filling a polygonal mold frame with the specific catalyst dispersion, a printing method such as a screen printing method, inkjet, spray, dispenser, and die coater. In one aspect, it is preferable to use a screen printing method. By using the screen printing method, the formed specific dispersion layer can be formed into a more favorable shape without causing defects in the edge portion.

In a case of forming the catalyst dispersion layer, it is preferable to apply the specific catalyst dispersion in a predetermined shape onto the ion-exchange membrane or onto the substrate X, and then dry the applied specific catalyst dispersion.

As a drying unit, for example, a general drying unit such as hot air drying using an oven or the like, or drying using an electromagnetic wave such as a microwave can be used.

The drying temperature may be set according to the components such as the solvent contained in the specific catalyst dispersion. The drying temperature can be, for example, 30°C to 300°C.

The drying time is, for example, practically in a range of 1 second to 1 hour.

An aspect (hereinafter, referred to as "aspect X") in which a catalyst dispersion layer in which the specific catalyst dispersion is formed into a predetermined shape is disposed on one surface of the substrate X to obtain a transfer material X having the substrate X and the catalyst dispersion layer, and then the catalyst dispersion layer of the transfer material X is superimposed on at least one surface of the ion-exchange membrane to obtain a laminate will be described. The aspect X is an aspect in which the laminate is obtained by a so-called transfer method.

The substrate X may be a single sheet or a belt shape, but from the viewpoint of productivity, it is preferably a belt shape.

As the substrate X, for example, a fluororesin such as polytetrafluoroethylene (PTFE), or a film substrate such as polyethylene terephthalate (PET) or polypropylene (PP) can be used. The substrate X functions as a release material.

The laminate in which the catalyst dispersion layer of the transfer material X is superimposed on at least one surface of the ion-exchange membrane can be obtained, for example, by bringing at least one surface of the ion-exchange membrane and the catalyst dispersion layer of the transfer material X into contact with each other and then pressurizing the laminate.

As a pressing unit, a roll press, a flat press, or the like can be used.

The pressure at the time of pressurization can be, for example, 0.1 MPa to 100 MPa.

In the step A, it is preferable to form the catalyst dispersion layer on both surfaces of the ion-exchange membrane to obtain a laminate. The catalyst dispersion layer may be formed on one surface of the ion-exchange membrane, and then the catalyst dispersion layer may be formed on the other surface, or the catalyst dispersion layer may be formed on both surfaces of the ion-exchange membrane at the same time.

In a case where the catalyst dispersion is formed on both surfaces of the ion-exchange membrane to dispose the catalyst dispersion layer, it is preferable that two catalyst dispersion layers facing each other through the ion-exchange membrane have the same shape, and the two catalyst dispersion layers are disposed through the ion-exchange membrane at positions where the outer peripheries thereof do not deviate from each other to form a laminate. By performing the step A, the catalyst dispersion layers can be accurately formed at a desired position on both surfaces of the ion-exchange membrane.

### (Specific Catalyst Dispersion)

The specific catalyst dispersion used in the step A contains a catalyst and an ionomer resin, and has a viscosity of 1 Pa·s to 500 Pa·s at 25°C.

### <Viscosity>

The viscosity of the specific catalyst dispersion is 1 Pa·s to 500 Pa·s at 25°C, preferably 0.5 Pa·s to 700 Pa·s, and more preferably 0.3 Pa·s to 800 Pa·s. In a case where the viscosity of the specific catalyst dispersion is within the above-described range, the specific catalyst dispersion is easily formed into a convex polygonal shape, and the productivity of the ion-exchange membrane with a catalyst layer is further improved.

The viscosity of the specific catalyst dispersion can be adjusted by the type and amount of components contained in the specific catalyst dispersion, such as the catalyst and the ionomer resin.

The viscosity of the specific catalyst dispersion can be measured with a B-type viscometer.

### <Catalyst>

The specific catalyst dispersion contains a catalyst. The catalyst is not particularly limited as long as it is a catalyst used in a catalyst layer in solid polymer electrolyte water electrolysis.

As the catalyst, a single noble metal such as platinum, iridium, ruthenium, rhodium, or palladium; an alloy of platinum and manganese, iron, cobalt, nickel, copper, zinc, or the like; a ternary alloy of platinum, ruthenium, and manganese, iron, cobalt, nickel, copper, zinc, or the like is suitably used. The catalyst may be an oxide (for example, iridium oxide) containing the above-described metal.

The catalyst may be supported on conductive particles. Suitable examples of the conductive particles include carbon particles such as oil furnace black, gas furnace black, acetylene black, thermal black, graphite, carbon nanotubes, and graphene, and metal oxide particles such as tin oxide. Examples of the catalyst supported on the conductive particles include platinum supported on carbon particles (hereinafter, also referred to as platinum-supported carbon).

The catalyst preferably contains an aggregate having an average secondary particle diameter of 20 µm or less, and more preferably an aggregate having an average secondary particle diameter of 10 µm or less. In a case where the catalyst has a secondary particle diameter of 20 µm or less (preferably 10 µm or less), the viscosity of the specific catalyst dispersion is easily controlled within 1 Pa·s to 500 Pa·s, the shape of the catalyst is made uniform, and the performance of the ion-exchange membrane with a catalyst layer is improved. The lower limit value of the average secondary particle diameter is, for example, preferably 0.01 µm.

The aggregate can be obtained, for example, by crushing a solid substance consisting of a catalyst using a disintegrating unit. Examples of the disintegrating unit include a ball mill, a jet mill, and a homogenizer.

The average secondary particle diameter is measured by a particle size distribution measuring apparatus. As a particle size distribution analyzer, a laser diffraction/scattering-type particle size distribution analyzer (product name: LA-960, manufactured by HORIBA, Ltd.) can be used. Specifically, the secondary particle diameter of the aggregate is measured by diluting a catalyst dispersion to be measured with a measuring solvent to prepare a sample solution, and measuring a particle size distribution in the sample solution with a particle size distribution measuring apparatus. The measurement is performed three times, and the obtained measurement values are arithmetically averaged, and the value obtained by rounding off the first decimal place is defined as the average secondary particle diameter.

The content of the catalyst in the specific catalyst dispersion is preferably 1% by mass to 90% by mass, more preferably 5% by mass to 70% by mass, and still more preferably 7% by mass to 50% by mass with respect to the total amount of the specific catalyst dispersion.

### <Ionomer resin>

The specific catalyst dispersion contains an ionomer resin. The ionomer resin preferably has proton conductivity.

Examples of the ionomer resin include a perfluorosulfonic acid-based polymer and a hydrocarbon-based polymer.

The specific catalyst dispersion may contain only one kind of the ionomer resin, or may contain two or more kinds thereof.

As the ionomer resin, a commercially available product may be used. Examples of the commercially available product of the ionomer resin include Nafion (registered trademark, manufactured by Chemours), Aquivion (registered trademark, manufactured by Solvay), Flemion (registered trademark, manufactured by AGC Inc.), Aciplex (registered trademark, manufactured by Asahi Kasei Corporation), and Fumion F (registered trademark, manufactured by FUMA-TECH Co., Ltd.).

In a case where the specific catalyst dispersion contains the ionomer resin, from the viewpoint of uniformly dispersing the ionomer resin in the specific catalyst dispersion, it is also preferable to use the solid of the ionomer resin by crushing and miniaturizing the solid matter of the ionomer resin using a disintegrating unit. Examples of the disintegrating unit include a mill, a ball mill, a jet mill, and a homogenizer. The uniform dispersion of the ionomer resin in the specific catalyst dispersion contributes to the improvement of the performance of the ion-exchange membrane with a catalyst layer.

In addition, in a case where a solution containing the ionomer resin is obtained and used, it is also preferable to crush and miniaturize a solidified product obtained by drying and solidifying the solution containing the ionomer resin.

The content of the ionomer resin in the specific catalyst dispersion is preferably 0.5% by mass to 50% by mass, more preferably 1% by mass to 30% by mass, and still more preferably 2% by mass to 20% by mass with respect to the total amount of the specific catalyst dispersion.

### <Solvent>

The specific catalyst dispersion may contain a solvent as long as the viscosity at 25°C is 1 Pa·s to 500 Pa·s. The solvent can function as a dispersion medium for the catalyst in the specific catalyst dispersion. Examples of the solvent include a solvent having a hydroxyl group, and the solvent having a hydroxyl group is, for example, preferably at least one selected from water and an alcohol.

In a case where the specific catalyst dispersion contains a solvent, the content of the solvent in the specific catalyst dispersion is preferably 85% by mass or less, more preferably more than 0% by mass and 65% by mass or less, and still more preferably 0.1% by mass to 25% by mass with respect to the total amount of the specific catalyst dispersion.

### <<Alcohol>>

The specific catalyst dispersion preferably contains an alcohol. That is, in one aspect, the specific catalyst dispersion is preferably a catalyst dispersion containing a catalyst, an ionomer resin, and an alcohol as a solvent, and having the viscosity at 25°C of 1 Pa·s to 500 Pa·s.

In a case where the specific catalyst dispersion contains an alcohol, the dispersibility of the catalyst in the catalyst dispersion and the adhesiveness between the catalysts and/or between the catalyst and the ion-exchange membrane or the substrate X are improved, and thus a catalyst layer having excellent dimensional stability is obtained.

In a case where the specific catalyst dispersion contains an alcohol, the specific catalyst dispersion can contain an alcohol in a range such that the viscosity at 25°C can be adjusted to be 1 Pa·s to 500 Pa·s.

Examples of the alcohol include a monohydric alcohol, and for example, at least one selected from the group consisting of methanol, ethanol, 2-propanol (also referred to as isopropanol), 1-propanol, and butanol is preferable, and at least one selected from ethanol or 2-propanol is more preferable from the viewpoint of the dispersibility of the ionomer resin.

The specific catalyst dispersion may not contain a solvent, that is, the content of the solvent with respect to the total amount of the specific catalyst dispersion may be 0% by mass.

### <Other components>

The specific catalyst dispersion may contain other components. Specifically, additives such as a dispersant for controlling the dispersibility of the catalyst, a viscosity-adjusting agent for adjusting the viscosity of the dispersion and/or the sedimentation of the catalyst, a surfactant for controlling the surface tension, an antioxidant for preventing oxidation of the catalyst and/or the ionomer, a curing agent for controlling the thermal curing of the resin, and a slip agent for controlling the transport or the lamination property of the film can be optionally added.

The step A can be carried out, for example, as follows.

### <Preparation of specific catalyst dispersion>

The specific catalyst dispersion can be prepared by mixing the catalyst, the ionomer resin, a solvent as desired, and any other components.

The specific catalyst dispersion can be prepared, for example, by mixing the catalyst, the dispersion solution of the ionomer resin, and the solvent (preferably, alcohol) using any stirring unit.

As the stirring unit, for example, a homogenizer (for example, a rotary type homogenizer) can be used.

The stirring speed may be, for example, 100 revolutions per minute (rpm) to 10,000 rpm (hereinafter, the same applies). The prepared specific catalyst dispersion may be used by filling any storage container.

The concentration of solid contents of the specific catalyst dispersion is preferably 5% by mass to 30% by mass.

In the step A, the laminate may be obtained by heating (that is, preheating) the catalyst dispersion layer included in the transfer material X to a temperature of 70°C to 180°C in advance, and then superimposing the catalyst dispersion layer on at least one surface of the ion-exchange membrane.

The above-described preheating may also serve as heating of the laminate in the step B.

It is preferable to preheat the catalyst dispersion layer included in the transfer material X in the step A prior to the step B, so that the ionomer resin included in the catalyst dispersion layer is dissolved, and the adhesiveness between the ion-exchange membrane and the catalyst layer is further improved in a case where the pressing is performed in the step B.

Examples of the heating unit used for the above-described preheating include a heater and a microwave.

### [Step B]

In the step B, the laminate heated to a temperature of 100°C to 200°C is pressed. By the pressing, the ion-exchange membrane and the catalyst dispersion layer are heat fusion-welded and bonded to each other, whereby the catalyst layer is formed on at least one surface of the ion-exchange membrane, and the ion-exchange membrane with a catalyst layer is obtained.

In the step B, it is necessary that the laminate is heated to a temperature of 100°C to 200°C at the start of the pressing. In one aspect, the temperature of the laminate is preferably 120°C to 130°C. The heating temperature in the step B is preferably set to the melting point of the ionomer resin or to a temperature in the vicinity of the melting point. The temperature in the vicinity of the melting point is, for example, in a range of ± 20°C from the melting point.

In the step B, the temperature of the laminate means the surface temperature of the catalyst dispersion layer included in the laminate. A thermocouple can be used for measuring the temperature.

The laminate can be adjusted to a temperature of 100°C to 200°C, for example, according to the following aspect (1) or (2).

### Aspect (1):

The laminate obtained in the step A is heated to 100°C to 200°C.

The laminate may be a laminate in which the specific catalyst dispersion is directly formed into a predetermined shape on at least one surface of the ion-exchange membrane to form the catalyst dispersion layer.

The laminate may be a laminate obtained by disposing the catalyst dispersion layer in which the specific catalyst dispersion is formed into a predetermined shape on one surface of the substrate X to obtain a transfer material X having the substrate X and the catalyst dispersion layer, and then superimposing the catalyst dispersion layer included in the transfer material X on at least one surface of the ion-exchange membrane.

### Aspect (2):

In the step A, the laminate obtained by superimposing the catalyst dispersion layer on at least one surface of the ion-exchange membrane after preheating the catalyst dispersion layer included in the transfer material X to a temperature of 70°C to 180°C is used.

In the present aspect, in a case where the temperature of the laminate is lower than 100°C, the laminate can be heated to 100°C to 200°C and then pressed.

In the present aspect, in a case where the temperature of the laminate is higher than 100°C, the pressing can be performed as is.

In addition, in a case where the temperature of the laminate heated to 100°C to 200°C is lowered to below 100°C, the laminate may be heated again to 100°C to 200°C.

In the step B, the pressure applied in a case of pressing the laminate can be appropriately set. From the viewpoint of adhesiveness between the ion-exchange membrane and the catalyst layer, the pressure is preferably 1 MPa to 20 MPa and more preferably 1 MPa to 10 MPa.

As a pressing unit, a roll press, a flat press, or the like can be used.

The pressing time is preferably 0.1 minutes to 20 minutes and more preferably 0.5 minutes to 10 minutes.

The feeding speed in a case of using the roll press can be set to about 0.5 m/min to 5 m/min.

In the method for producing an ion-exchange membrane with a catalyst layer according to the embodiment of the present disclosure, in a case where the transfer material X is used, it is preferable that the step B further includes a step of peeling off the substrate X after the pressing.

In the step of peeling off the substrate X, the substrate X is peeled off from the laminate after the pressing.

As a peeling unit, a peeling bar, a suction roll, a vacuum chuck, or the like can be used.

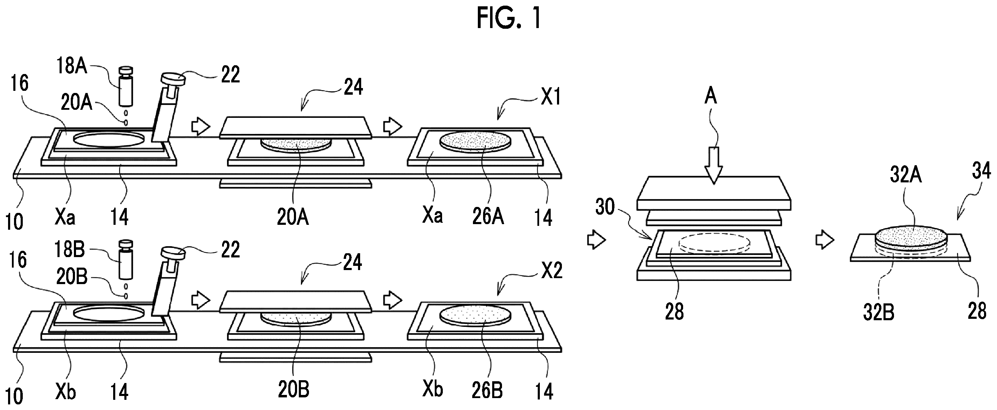

FIG. 1 is a schematic view for describing an example in which a series of steps including the step A and the step B are performed using the transfer substrate X.

As shown in FIG. 1, in the present example, first, a transfer material X1 and a transfer material X2 are produced by forming a specific catalyst dispersion layer using a screen printing method.

Specifically, the screen printing plate 16 is placed on the substrate Xa or the substrate Xb placed on the support 10. In the present example, the support 10, the substrate Xa, and the substrate Xb are disposed on a heating pallet 14. The heating pallet 14 is a heating unit for performing preheating.

Next, in the production of the transfer material X1, the specific catalyst dispersion 20A filled in the dispenser 18A is applied into the stencil of the screen printing plate 16. In the present example, the specific catalyst dispersion 20A is a slurry containing iridium (O₂ catalyst) as a catalyst, an ionomer resin, and an alcohol. In addition, in the production of the transfer material X2, the specific catalyst dispersion 20B filled in the dispenser 18B is applied into the frame of the screen printing plate 16. In the present example, the specific catalyst dispersion 20B is a slurry containing platinum (H₂ catalyst) as a catalyst, an ionomer resin, and an alcohol.

It is preferable that the specific catalyst dispersion 20A or 20B applied into the stencil of the screen printing plate 16 is leveled using a leveling unit such as a squeegee 22.

Next, after the screen printing plate 16 is removed, the specific catalyst dispersion 20A disposed on one surface of the substrate Xa and the specific catalyst dispersion 20B disposed on one surface of the substrate Xb are dried in the drying furnace 24, respectively, and the transfer material X1 having the substrate Xa and the specific catalyst dispersion layer 26A and the transfer material X2 having the substrate Xb and the specific catalyst dispersion layer 26B are obtained.

Next, in the present example, the specific catalyst dispersion layer 26B of the transfer material X2 is superimposed on one surface of the ion-exchange membrane 28 to form a laminate 30, and then the specific catalyst dispersion layer 26B of the transfer material X2 and the specific catalyst dispersion layer 26A of the transfer material X1 are registered to face each other at positions where the outer peripheries thereof do not deviate from each other through the ion-exchange membrane 28. In FIG. 1, an example in which the formed transfer material X1 is inverted and the specific catalyst dispersion layer 26A and the specific catalyst dispersion layer 26B are registered to face each other is described, but the registration method is not limited to the above.

Next, the laminate 30 and the transfer material X1 are heated to a temperature of 100°C to 200°C and pressed (that is, heat-pressed) in the direction of the arrow A.

After the pressing, the substrate Xa and the substrate Xb are peeled off to obtain an ion-exchange membrane 34 with a catalyst layer having, on both surfaces of the ion-exchange membrane 28, an iridium catalyst layer 32A and a platinum catalyst layer 32B.

In the present example, both the transfer material X1 and the transfer material X2 are used during the pressing, but one of the transfer material X1 and the transfer material X2 may be heat-pressed, and then the other may be heat-pressed.

In the method for producing an ion-exchange membrane with a catalyst layer according to the embodiment of the present disclosure, after the step A and the step B are performed, the step A and the step B may be repeated. By repeating the step A and the step B, the thickness of the catalyst layer can be adjusted to any thickness. In a case where the step A and the step B are repeated, specifically, in the step A, the catalyst dispersion may be disposed in a polygonal shape on the catalyst layer formed on at least one surface of the ion-exchange membrane to form a polygonal catalyst dispersion layer, and then the step B may be performed.

### [Other steps]

The method for producing an ion-exchange membrane with a catalyst layer according to the embodiment of the present disclosure may include other steps in addition to the step A and the step B.

### Examples

Hereinafter, the method for producing an ion-exchange membrane with a catalyst layer according to the embodiment of the present disclosure will be described in more detail with reference to examples. However, the method for producing an ion-exchange membrane with a catalyst layer according to the embodiment of the present disclosure is not limited to the following examples without departing from the spirit of the present disclosure. Unless otherwise specified, "%" is based on mass.

### <Example 1>

### [Step A]

### = Production of platinum catalyst sheet =

### (Preparation of Platinum Catalyst Dispersion 1)

7.2 g of platinum-supported carbon, 21.4 g of a 20% Nafion dispersion solution (ionomer resin dispersion solution, DE2020CS type manufactured by FUJIFILM Wako Chemical Corporation), and 47.6 g of 2-propanol (manufactured by FUJIFILM Wako Pure Chemical Corporation, for electronic industry) as a dispersion solvent were prepared, weighed in a glove box, and put into a vial bottle to obtain a turbid material.

The turbid material taken out from the glove box was stirred at 2,000 rpm with a rotary type homogenizer to obtain a platinum catalyst-containing liquid 1. The concentration of solid contents of the prepared platinum catalyst-containing liquid 1 was 15%, and the viscosity at 25°C was 1,500 CP (1.5 Pa·s).

The average secondary particle diameter of the catalyst (aggregate) in the obtained platinum catalyst-containing liquid 1 was measured using a particle size analyzer: Partica LA-9600V2, manufactured by HORIBA, Ltd. The average secondary particle diameter was 3 µm.

The solvent was volatilized from the prepared platinum catalyst-containing liquid 1 with an evaporator, and the concentration of solid contents was increased to 90% and the viscosity at 25°C was increased to 10,000 CP (10 Pa·s) to obtain a platinum catalyst dispersion 1 (specific catalyst dispersion).

### (Production of platinum catalyst sheet)

A PET sheet (thickness: 50 µm, 150 mm square) was prepared as a substrate X.

A screen printing machine was used for forming the specific catalyst dispersion layer.

A PTFE sheet was installed in the screen printing machine, and the platinum catalyst dispersion 1 was applied into a stencil of a screen printing plate to have a decagonal shape (area: approximately 100 cm²) with a thickness of 20 µm to form a specific catalyst dispersion layer, thereby obtaining a platinum catalyst sheet 1 (transfer material X) having a platinum catalyst dispersion layer.

The platinum catalyst sheet was placed on a hot press device (manufactured by Toyo Seiki Seisaku-sho, Ltd., product name: mini test press-10, 160°C), allowed to stand for 1 minute, and then brought into contact with an ion-exchange membrane (Nafion N115, manufactured by Chemours Company) having a thickness of 125 µm and a size of 150 mm square by aligning the positions, thereby obtaining a laminate in which a surface of the platinum catalyst sheet having the specific catalyst dispersion layer is superimposed on the ion-exchange membrane.

### [Step B]

Next, a laminate in which an elastic sheet having a thickness of 500 µm was further laminated on the above-described laminate was pressed with a hot press device at 1.5 MPa for 5 minutes. The temperature of the laminate at the time of starting the pressing was 140°C. As a result, a platinum catalyst layer was formed on one surface of the ion-exchange membrane.

After releasing the pressing, the laminate was cooled, and the elastic sheet and the PTFE sheet were peeled off.

As described above, an ion-exchange membrane with a catalyst layer of Example 1, which has a platinum catalyst layer on one surface of an ion-exchange membrane, was obtained.

### <Example 2>

In Example 1, except that a platinum catalyst dispersion 2 prepared as described below was used in place of the platinum catalyst dispersion 1 to prepare a platinum catalyst sheet 2, an ion-exchange membrane with a catalyst layer of Example 2 having a platinum catalyst layer on one surface of an ion-exchange membrane was obtained in the same manner as in Example 1.

### (Preparation of Platinum Catalyst Dispersion 2)

7.2 g of platinum-supported carbon, 21.4 g of a 20% Nafion dispersion solution (DE2020CS type, manufactured by FUJIFILM Wako Chemical Corporation), and 47.6 g of 2-propanol (manufactured by FUJIFILM Wako Pure Chemical Corporation, for electronic industry) as a dispersion solvent were prepared, weighed in a glove box, and put into a vial bottle.

The turbid material taken out from the glove box was stirred at 2,000 rpm with a rotary type homogenizer to obtain a platinum catalyst-containing liquid 2. The concentration of solid contents of the adjusted platinum catalyst-containing liquid 2 was 15%.

For the obtained platinum catalyst-containing liquid 2, the average secondary particle diameter of the catalyst (aggregate) was measured using a particle size analyzer: Partica LA-9600V2, manufactured by HORIBA, Ltd. The average secondary particle diameter was 3 µm.

The solvent was volatilized from the prepared platinum catalyst-containing liquid 2 using an evaporator, and then a 5:5 solution of ethanol and water was added thereto to increase the concentration of solid contents to 90% and the viscosity to 10,000 CP (10 Pa·s), thereby obtaining a platinum catalyst dispersion 2 (specific catalyst dispersion).

### <Example 3>

### = Production of platinum catalyst sheet =

A platinum catalyst sheet 1 was prepared in the same manner as in Example 1.

### = Preparation of iridium catalyst sheet 1 =

An iridium catalyst sheet 1 (transfer material X) having a decagonal iridium catalyst dispersion layer was prepared in the same manner as in Example 1, except that the platinum catalyst dispersion 1 was changed to an iridium catalyst dispersion 1 shown below in Example 1.

### (Preparation of iridium catalyst dispersion 1)

3.8 g of iridium oxide, 4.8 g of a 20% Nafion dispersion solution (manufactured by FUJIFILM Wako Chemical Corporation, DE2020CS type), and 4.6 g of 2-propanol (manufactured by FUJIFILM Wako Pure Chemical Corporation, for electronic industry) as a dispersion solvent were prepared, weighed in a glove box, and put into a vial bottle.

The turbid material taken out from the glove box was stirred at 2,000 rpm with a rotating and revolving mixer to obtain an iridium catalyst-containing liquid 1. A concentration of solid contents of the adjusted iridium catalyst-containing liquid 1 was 36.4%.

An average secondary particle diameter of the catalyst (aggregate) in the obtained iridium catalyst-containing liquid 1 was measured using a particle size analyzer: Partica LA-9600V2, manufactured by HORIBA, Ltd. The average secondary particle diameter was 3 µm.

The solvent was evaporated from the prepared iridium catalyst-containing liquid 1 with an evaporator, and then ethanol was added thereto to obtain an iridium catalyst dispersion 1 having a concentration of solid contents of 90% and a viscosity of 10,000 CP (10 Pa·s).

In the same manner as in Example 1, the ion-exchange membrane and the platinum catalyst sheet 1 were pressed using a hot press device, and then the iridium catalyst dispersion layer of the iridium catalyst sheet 1 and the platinum catalyst layer were disposed to face each other through the ion-exchange membrane on a surface of the ion-exchange membrane on a side where the platinum catalyst sheet 1 was not disposed. After being allowed to stand for 1 minute, an elastic sheet was disposed on the iridium catalyst sheet 1, and the iridium catalyst dispersion layer was transferred onto the ion-exchange membrane at the same pressure as in Example 1.

Next, the laminate was cooled, and the elastic sheet and the PTFE sheet were cooled and peeled off.

As described above, an ion-exchange membrane with a catalyst layer of Example 3, which has a platinum catalyst layer on one surface of an ion-exchange membrane and an iridium catalyst layer on the other surface, was obtained.

### <Example 4>

The platinum catalyst dispersion 1 prepared in Example 1 was directly applied onto one surface of the ion-exchange membrane so as to have a decagonal shape (area: 100 cm²) with a thickness of 20 µm, thereby obtaining a laminate.

The obtained laminate was pressed under the same hot press device and pressure conditions as in Example 1.

As described above, an ion-exchange membrane with a catalyst layer of Example 4, which has a platinum catalyst layer on one surface of an ion-exchange membrane, was obtained.

### <Example 5>

The platinum catalyst dispersion 1 used in Example 3 was directly applied onto one surface of the ion-exchange membrane so as to have a decagonal shape (area: 100 cm²) with a thickness of 20 µm to form a first specific catalyst dispersion layer, and the iridium catalyst dispersion 1 was directly applied onto the other surface of the ion-exchange membrane so as to have a decagonal shape (area: 100 cm²) with a thickness of 20 µm at a position overlapping the first specific catalyst dispersion layer, thereby forming a second specific catalyst dispersion layer, and a laminate was obtained.

The obtained laminate was pressed under the same hot press device and pressure conditions as in Example 3.

As described above, an ion-exchange membrane with a catalyst layer of Example 5, which has a platinum catalyst layer on one surface of an ion-exchange membrane and an iridium catalyst layer on the other surface, was obtained.

### <Comparative Example 1>

In Example 1, except that a platinum catalyst-containing liquid 1 was used in place of the platinum catalyst dispersion 1, an ion-exchange membrane with a catalyst layer of Comparative Example 1 having a platinum catalyst layer on one surface of an ion-exchange membrane was obtained in the same manner as in Example 1.

### <Comparative Example 2>

In Example 4, except that a platinum catalyst-containing liquid 1 was used in place of the platinum catalyst dispersion 1, an ion-exchange membrane with a catalyst layer of Comparative Example 2 having a platinum catalyst layer on one surface of an ion exchange membrane was obtained in the same manner as in Example 4.

### [Evaluation]

The ion-exchange membranes with a catalyst layer, which were obtained in each of the above-described examples, were evaluated by the following evaluation 1 (dimensional stability of the catalyst layer) and evaluation 2 (curl amount). The evaluation results are shown in Table 1.

### <Evaluation 1 (dimensional stability of catalyst layer)>

The dimensional stability of the catalyst layer was evaluated by the formability of the edge portion of the catalyst layer obtained in each example.

### -Evaluation Methods-

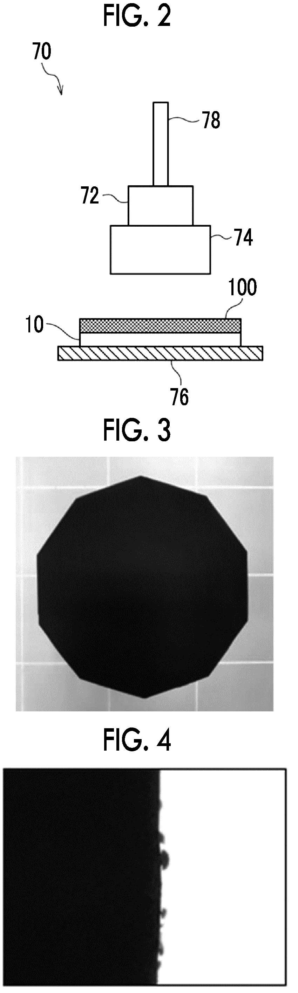

An image inspection device 70 including a CCD camera 72 and an illumination 74 as shown in FIG. 2 was manufactured. The ion-exchange membranes with a catalyst layer obtained in each example were observed using the image inspection device, and the formability of the edge portion of the catalyst layer was evaluated.

In the image inspection device 70, the ion-exchange membrane 64 (ion-exchange membrane with a catalyst layer 60) on which the catalyst layer 62 was formed was placed on a measurement table 76, and the CCD camera 72 and the illumination 74 installed on the upper portion of the catalyst layer 62 were used, whereby the entire surface (that is, the entire upper surface) of the catalyst layer 62 could be imaged. The CCD camera 72 and the illumination 74 can be moved by a guide 78 to be connected.

The entire upper surface of the decagonal catalyst layer (area: about 100 mm²) obtained in each of the above-described examples was imaged. FIG. 3 shows a photograph of the decagonal catalyst layer obtained in Example 1.

In Example 3, each of the platinum catalyst layer and the iridium catalyst layer was imaged.

Furthermore, the obtained captured image was divided into 100 images each having a 10 mm × 10 mm visual field, and portions with disordered edges were extracted by image analysis. The portion where the edge was disturbed was observed as in the photograph shown in FIG. 4.

Based on the results of the image analysis, the formability of the edge portion of the catalyst layer was evaluated according to the following standard, and the results were used as the evaluation results of the dimensional stability of the catalyst layer. A, B, C, and D are ranks that are practically acceptable, and the most excellent rank is A.

### -Criteria-

A: The proportion of the number of captured images in which the edge protrusion or the like was observed is 1% or less.
B: The proportion of the number of captured images in which the edge protrusion or the like was observed is more than 1% and 3% or less.
C: The proportion of the number of captured images in which the edge protrusion or the like was observed is more than 3% and 5% or less.
D: The proportion of the number of captured images in which the edge protrusion or the like was observed is more than 5% and 10% or less.
E: The proportion of the number of captured images in which the edge protrusion or the like was observed is more than 10%.

### <Evaluation 2 (curl amount)>

The curl amount (the amount of lifting from the measurement plate) of the ion-exchange membrane with a catalyst layer was evaluated.

The present evaluation was performed on the ion-exchange membrane with a catalyst layer other than Example 3 among the ion-exchange membranes having a catalyst layer obtained in each of the above-described examples.

### -Evaluation Methods-

The ion-exchange membrane with a catalyst layer (150 mm square) to be evaluated was placed on a measurement plate such that the catalyst layer side faced upward, and a hard ruler was placed to each of the four corners of the measurement plate to measure the curl amount (the amount of lifting from the measurement plate). As the amount of lifting was larger, it was determined that the curl of the ion-exchange membrane with a catalyst layer was stronger.

The obtained measurement values (amounts of lifting) were arithmetically averaged, and the value obtained by rounding off the first decimal place was used as the curl amount and evaluated according to the following standard. A, B, C, and D are ranks that are practically acceptable, and the most excellent rank is A.

### -Criteria-

A: The amount of lifting is 1 mm or less.
B: The amount of lifting is more than 1 mm and 3 mm or less.
C: The amount of lifting is more than 3 mm and 5 mm or less.
D: The amount of lifting is more than 5 mm and 10 mm or less.
E: The amount of lifting is more than 10 mm.

**[Table 1]**

| | Step A | | | | | Step B | | | Evaluation | |
|---|---|---|---|---|---|---|---|---|---|---|
| | Method of forming specific catalyst dispersion layer | Specific catalyst dispersion | | | | Laminate temperature | Pressing conditions | | Dimensional stability of catalyst layer | Curl amount |
| | | Catalyst | Ionomer resin | Solvent | Viscosity @ 25°C (Pa·s) | | Pressure (MPa) | Time (min) | | |
| Example 1 | Transfer | Platinum | Nafion | 2-propanol | 10 | 140 | 1.5 | 1 | A | A |
| Example 2 | Transfer | Platinum | Nafion | 2-propanol ethanol water | 10 | 140 | 1.5 | 1 | B | B |
| Example 3 | Transfer | Platinum | Nafion | 2-propanol | 10 | 140 | 1.5 | 1 | A | |
| | Transfer | Iridium oxide | Nafion | 2-propanol ethanol | 10 | 140 | 1.5 | 1 | A | |
| Example 4 | Direct coating | Platinum | Nafion | 2-propanol | 10 | 140 | 1.5 | 1 | A | C |
| Example 5 | Direct coating | Platinum | Nafion | 2-propanol | 10 | 140 | 1.5 | 1 | A | D |
| Comparative Example 1 | Transfer | Platinum | Nafion | 2-propanol | 1.5 | 140 | 1.5 | 1 | E | B |
| Comparative Example 2 | Direct coating | Platinum | Nafion | 2-propanol | 1.5 | 140 | 1.5 | 1 | E | E |

As shown in Table 1, all the ion-exchange membranes with a catalyst layer obtained in Examples had dimensional stability of the catalyst layer. In addition, the ion-exchange membranes with a catalyst layer obtained in Examples also had a small curl amount.

### Explanation of References

10: support
Xa, Xb: substrate
16: screen printing plate
14: heating pallet
18A, 18B: dispenser
20A, 20B: specific catalyst dispersion
22: squeegee
24: drying furnace
26A, 26B: specific catalyst dispersion layer
28: ion-exchange membrane
30: laminate
32B: catalyst layer (platinum catalyst layer)
32A: catalyst layer (iridium catalyst layer)
34: ion-exchange membrane with catalyst layer
X1, X2: transfer material
A: pressing direction
70: image inspection device
72: CCD camera
74: illumination
78: guide
60: ion-exchange membrane with catalyst layer
62: catalyst layer
64: ion-exchange membrane

The disclosure of JP2023-193025 filed on November 13, 2023, is incorporated by reference in its entirety into the present specification.

All documents, patent applications, and technical standards described in the present specification are herein incorporated by reference herein to the same extent that each individual document, patent application, or technical standard was specifically and individually indicated to be incorporated by reference.

## Claims

1. A method for producing an ion-exchange membrane with a catalyst layer, the method comprising:
a step A of disposing, on at least one surface of an ion-exchange membrane, a catalyst dispersion layer obtained by forming a catalyst dispersion containing a catalyst and an ionomer resin into a predetermined shape, the catalyst dispersion having a viscosity of 1 Pa·s to 500 Pa·s at 25°C, to obtain a laminate having the ion-exchange membrane and the catalyst dispersion layer; and
a step B of pressing the laminate heated to a temperature of 100°C to 200°C.

2. The method for producing an ion-exchange membrane with a catalyst layer according to claim 1,
wherein the catalyst dispersion contains an alcohol.

3. The method for producing an ion-exchange membrane with a catalyst layer according to claim 2,
wherein the alcohol is at least one selected from ethanol or 2-propanol.

4. The method for producing an ion-exchange membrane with a catalyst layer according to claim 1 or 2,
wherein the catalyst contains an aggregate having an average secondary particle diameter of 10 µm or less.

5. The method for producing an ion-exchange membrane with a catalyst layer according to claim 1 or 2,
wherein in the step A, catalyst dispersion layers are formed on both surfaces of the ion-exchange membrane to obtain the laminate.

6. The method for producing an ion-exchange membrane with a catalyst layer according to claim 1 or 2,
wherein in the step A, the catalyst dispersion layer obtained by forming the catalyst dispersion into a predetermined shape is disposed on one surface of a substrate X to obtain a transfer material X having the substrate X and the catalyst dispersion layer, and then the catalyst dispersion layer included in the transfer material X is superimposed on at least one surface of the ion-exchange membrane to obtain the laminate.

7. The method for producing an ion-exchange membrane with a catalyst layer according to claim 6,
wherein the step A includes preheating the catalyst dispersion layer included in the transfer material X to a temperature of 70°C to 180°C, and then superimposing the catalyst dispersion layer on the at least one surface of the ion-exchange membrane to obtain the laminate.
